# EUROPÄISCHE PATENTSCHRIFT

(11) **EP 0 802 405 B1**
(45) Veröffentlichungstag und Bekanntmachung des Hinweises auf die Patenterteilung: **07.12.2005**
(21) Anmeldenummer: 97103316.2
(22) Anmeldetag: 28.02.1997
(51) Int. Cl.: G01N 3/30, G01N 3/02

(54) **Prüfmaschine für Kerbschlagbiegeversuche**
Testing machine for impact bending tests
Machine d'essai de la résistance au choc d'éprouvettes en flexion

(30) Priorität: 17.04.1996 DE 19614966
(43) Veröffentlichungstag der Anmeldung: 22.10.1997
(73) Patentinhaber: Forschungszentrum Karlsruhe GmbH, 76133 Karlsruhe (DE)
(72) Erfinder: Rieth, Michael, D-75045 Walzbachtal (DE); Dafferner, Bernhard, 76646 Bruchsal (DE)

(56) Entgegenhaltungen:
- DD-A- 261 720
- US-A- 4 405 243
- US-A- 4 802 366
- PATENT ABSTRACTS OF JAPAN vol. 010, no. 294 (P-504), 7.Oktober 1986 -& JP 61 112943 A (SCIENCE & TECH AGENCY), 30.Mai 1986,
- PATENT ABSTRACTS OF JAPAN vol. 010, no. 003 (P-418), 8.Januar 1986 -& JP 60 161543 A (YASUDA SEIKI SEISAKUSHO:KK), 23.August 1985,

## Beschreibung

Die Erfindung betrifft eine Prüfmaschine für Kerbschlagbiegeversuche an Proben. Eine solche Maschine besteht aus einem Fallhammer und einem Lager aus Auf- und Widerlager. An das Schlagwerk aus Fallhammer und Lager ist ein Probenma gazin mit Probenschieber am Magazinausgang und Probenzuführung am Magazineingang angebracht. Weiter ist eine Temperiereinrichtung zum Temperieren der Proben vorhanden.

Beim Kerbschlagbiegeversuch muss gemäß DIN EN 10 045 Teil 1 eine Probe innerhalb von fünf Sekunden nach Entnahme aus dem Temperiereinrichtung geprüft werden. Die Temperierung wird üblicherweise in Öfen, Kühlschränken, Ölbädern oder Kühlflüssigkeiten durchgeführt, und die anschließende Probenbeladung erfolgt manuell mit Greifzangen. Durch die manuelle Beladung (innerhalb von 5 sec) ist ein reproduzierbarer Temperaturgradient innerhalb der Probe nicht gewährleistet. Außerdem ist ein nicht unerheblicher apparativer Aufwand zur Realisierung von variablen Prüftemperaturen in einem möglichst großen Bereich notwendig.

D. J. Alexander et al. beschreibt unter dem Titel "A Semiautomated Computer-Interactive Dynamic Impact Texting System" wie temperierte Prüflinge Kerbschlagversuchen ausgesetzt und die Messergebnisse ausgewertet werden.

In Patent Abstracts Of Japan vol. 010. no. 294 (P-504), 7. Oktober 1986 wird in JP 61 11 29 43 A (SCIENCE & TECH AGENCY), 30. Mai 1986 eine Einrichtung beschrieben, eine große Anzahl Proben auf ihre mechanischen Eigenschaften hin zu testen. Die Proben werden gestapelt und herabgekühlt. In einer angebauten Probenmagazin werden die Proben gestapelt und Probe für Probe am Ausgang durch eine Ladeeinrichtung auf ein Widerlager für den Kerbschlag geschoben.

In der DD 261 720 A3 wird eine Temperiereinrichtung für eine Prüfanordnung zur automatisierten Kerbschlagbiegeprüfung von temperierten Probekörpern vorgestellt. Als Temperiereinrichtung wird eine Temperierkammer eingesetzt. Diese Kammer ist ein doppel wandiger, isolierter Behälter mit Temperaturregler, Temperaturmesseinrichtung und beigeordneter Probentemperiereinrichtung. Im Mantel des Behälters sind Rohrleitungen mit Gefälle zur Aufnahme des Kühlmediums, vorzugsweise Stickstoff, eingebaut. Die Rohrleitungen sind mit einem Stickstoffreservoir verbunden, das seriell mit einer Druckluftvorlage, einer Kühlfalle und einem KCL-Trockenturm gekoppelt ist. Im Behälter ist ein Probenkörpermagazin mit übereinander liegenden Proben angeordnet. Das in der Kammer eingebaute Magazin ist über Öffzungen in den Stirnseiten der Kammer jeweils mit einer Probentransporteinrichtung eingangsseitig und Lagern ausgangsseitig gekoppelt.

Bei der Durchführung von instrumentierten Kerbschlagbiegeversuchen (Versuche mit dynamischer Kraftmessung) tritt noch ein weiteres Problem auf. Die Probe muss exakt an den Widerlagern der Prüfmaschine anliegen. Ist das nicht der Fall, so treten im anfänglichen Kraftverlauf undefinierte Schwingungen (Prellen) durch den abreißenden Kraftschluss zwischen Hammerfinne und Probe auf. Deshalb muss die Probenbeladung sehr sorgfältig erfolgen. Bei manueller Beladung ist dies jedoch mit einer weiteren Verzögerung bis zur Versuchsdurchführung verbunden.

Der Erfindung liegt die Aufgabe zugrunde, Kerbschlagbiegeversuche so zu standardisieren und durchzuführen, dass die Ergebnisse für jede zeitliche Phase stets reproduzierbar sind.

Die Aufgabe wird durch eine Prüfmaschine für Kerbschlagbiegeversuche gemäß den Merkmalen des Anspruchs 1 gelöst.

Das Probenmagazin ist mit einem darunter angetriebenen, seitlich geführte Schieber zum Transport einer Probe, mit einem Anschlag und einer Rückhalteklappe am Ausgang des Probenmagazins versehen. Dadurch bleibt jeweils nur eine, vom Magazin freigegebene Probe zunächst ortsfest über dem zurück gleitenden Probenschieber, bis dieser völlig zurückgezogen ist und die Probe in eine Vertiefung an seinem Ende fällt.

Die Temperiereinrichtun g hat eine Temperierröhre, in die der Probenschieber ein- und durch sie fährt. Die auf der Vertiefung liegende Probe wird dadurch an die in der Temperierröhre vorgesehene, Position transportiert und dort auf die vorgesehene Temperatur temperiert und danach zum Kerbschlagbiegeversuch weitertransportiert.

Das Widerlager ist mit einem Endanschlag und einem Riegel versehen. Dadurch wird die temperierte Probe bis zum Endanschlag in die vorgesehene Lage geschoben und beim Zurückziehen des Probenschiebers über den herunter geschnappten Riegel dort gehalten. Die Finne des Fallhammers trifft dann die Probe an vorgesehenem Ort.

Die bei den Federn eines stabförmi gen Federpaars sitzen jeweils links und rechts am Fallhammer und drücken bei Berühren mit der aufgelegten Probe in Schlagrichtung. Dadurch wird bei herannahendem Hammer die auf dem Auflager aufliegende Probe vor dem Berühren der Finne zunächst vollends gegen das Widerlager geschoben und dann gedrückt. Bei sich weiterbewegendem Hammer gleiten die beiden Federn über die freie Probenkante. Mit Beginn der Berührung durch die Finne wird die Probe dann nur noch gegen das Auflager gedrückt. So wird zu Beginn der Berührung Finne-Probe ein Prellen zwischen den beiden vermieden.

Die gekennzeichneten Einrichtungen an der Prüfmaschine ermöglichen Versuchsreihen, bei denen einerseits definierte zeitliche Verhältnisse eingestellt und andererseits diese in streng eingehaltener Weise ablaufen können.

Die Probenentnahme und Positionierung in der Temperiereinrichtung mit Abkühl- bzw. Aufwärmung unter Berücksichtigung des spezifischen Wärmeverhaltens und schließlich die Positionierung für den prellfreien Kerbschlag können von Hand aber auch nach dem Festlegen des Beschickungsablaufs, automatisch durchgeführt werden.

Die Unteransprüche 2 bis 4 kennzeichnen einerseits die möglichen Antriebsarten für den Probenschieber (Anspruch 2), das kombinierte Kühl- und Heizsystem der Temperiereinrichtung (Anspruch 3) und die Steuerung der Prüfmaschine sowie Messsignalauswertung mit Hilfe der Datenverarbeitung (Anspruch 4).

Die zusätzlichen Einrichtungen an der Prüfmaschine bieten Vorteile:
Da ist die exakte Probenpositionierung. Die Probenbeladung erfolgt in Teilintervallen bis unter einer Sekunde. Die Temperiereinrichtung ist von -196φ C bis +600φ C betreibbar. Wesentlich ist der Gesichtspunkt, dass existierende Prüfeinrichtungen ohne Aufwand um die Einrichtungen leicht erweitert werden können. Der Versuchsablauf kann rechnergestützt automatisiert werden. Für die Automatisierung können speicherprogrammierte Steuerungen eingesetzt werden. Damit sind Versuchsdurchführungen ferngesteuert möglich, d. h. kontaminierte, auch radioaktive Proben können Kerbschlagversuchen unterzogen werden.

Die Erfindung wird nachstehend anhand der in der Zeichnung skizzierten Ausführungsformen erläutert.

Es zeigen:
- Fig. 1: zusätzliche Systemkomponenten;
- Fig. 2: den Transport zur Temperatureinrichtung;
- Fig. 3: die Probenbeladung zum Kerbschlag;
- Fig. 4: die Temperiereinrichtung;
- Fig. 5: das Andrücken der Probe;
- Fig. 6: die Prüfmaschine und
- Fig. 7: die Probenlage.

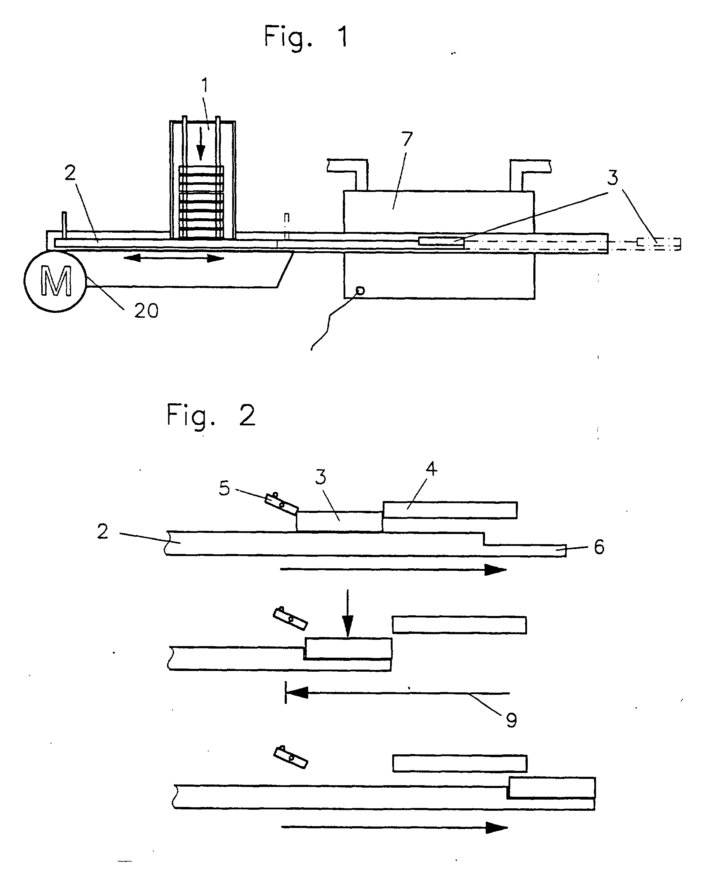

Das Beladesystem besteht aus einem Probenmagazin 1, einem Schieber 2 mit seitlichen Führungen sowie einem modifizierten Widerlager 10 (Fig. 1).

Aus dem Probenmagazin 1 gelangt durch das Öffnen einer Verriegelung die Probe 3 auf den Schieber 2. Die Betätigung des Schiebers 2 erfolgt wahlweise manuell oder durch den Schrittmotor 20. Bei der Vorwärtsbewegung des Schiebers 2 wird die Probe 3 in dem Führungskanal 8 gegen den Anschlag 4 geschoben. Der Anschlag 4 bildet die Temperierposition 9 der Probe 3. Bei der anschließenden Rückwärtsbewegung des Schiebers 2 wird die Probe 3 durch eine Rückhalteklappe 5 festgehalten. Der Schieber 2 kann somit unter der Probe 3 zurück gleiten. Wenn der Schieber 2 die Ausgangsposition erreicht, fällt die Probe 3 auf die Vertiefung 6 am Schieberende. Bei der nächsten Vorwärtsbewegung kann die Probe 3 dadurch den Anschlag 4 passieren (Fig. 2).

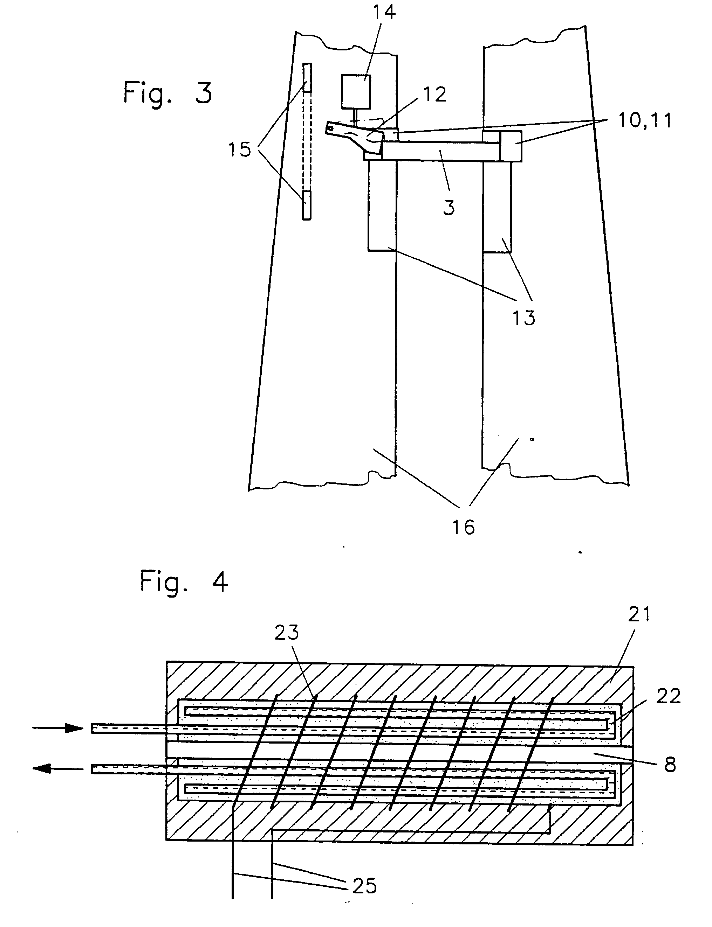

Durch diese zweite Vorwärtsbewegung wird die Probe 3 gegen den Endanschlag 11 am Widerlager 10 geschoben. Ein beweglicher Riegel 12 hält die Probe 3 in dieser Position während der Schieber 2 wiederum unter der Probe 3 zurückbewegt wird. Die Probe 3 fällt dann auf das Auflager 13 und wird weiterhin durch den Riegel 12 gegen den Anschlag gedrückt (Fig. 3). Vor der Hammerauslösung wird der Riegel 12 durch einen Elektromagneten 14 nach oben gezogen oder gedrückt. Dadurch liegt die Probe 3 beim Versuch frei auf dem Auflager 13. Koppelt man die Hammerauslösung mit der Schieberposition z. B. über eine Lichtschranke 15, so ist die Zeitverzögerung zwischen Beladung und Versuchsdurchführung minimal.

Für die Temperierung wird ein kombiniertes Heiz- und Kühlsystem verwendet. Dieses System besteht aus einem zylindrischen Metallblock 21, in dessen axialen Strömungskanälen 22 beim Kühlvorgang flüssiger oder gasförmiger Stickstoff 24 oder ein anderes geeignetes Kühlmittel 24 strömt (Fig. 4). Über ein Stellventil und eine adaptive Temperaturregelung können Probentemperaturen zwischen Raumtemperatur und -196° C erreicht werden.

Für den Heizbetrieb ist der Metallblock 21 zusätzlich mit einem Mantelheizleiter 23 umwickelt. Das Heizleiterelement 23 kann über einen PI-Regler mit Leistungssteller 25 konstante Probentemperaturen bis über 600° C erzeugen.

Während der Temperierung liegt die Probe 3 im Führungskanal 8 des Schiebers 2 in einem Metallmantel. Die Temperaturmessung erfolgt über ein Thermoelement oder PT 100, dessen Spitze in einer Bohrung oder Längsnut in diesem Metallmantel in unmittelbarer Nähe der Probe 3 steckt.

Beim Kühlvorgang wird zusätzlich die Einströmtemperatur des Stickstoffs 24 gemessen. Dadurch kann ein Regelalghorithmus verwendet werden, der die thermodynamischen Gesetze der Wärmeübertragung berücksichtigt. Somit ist die Kühlregelung nahezu unabhängig von der Ausführung der Stickstofflagerung und - zuführung.

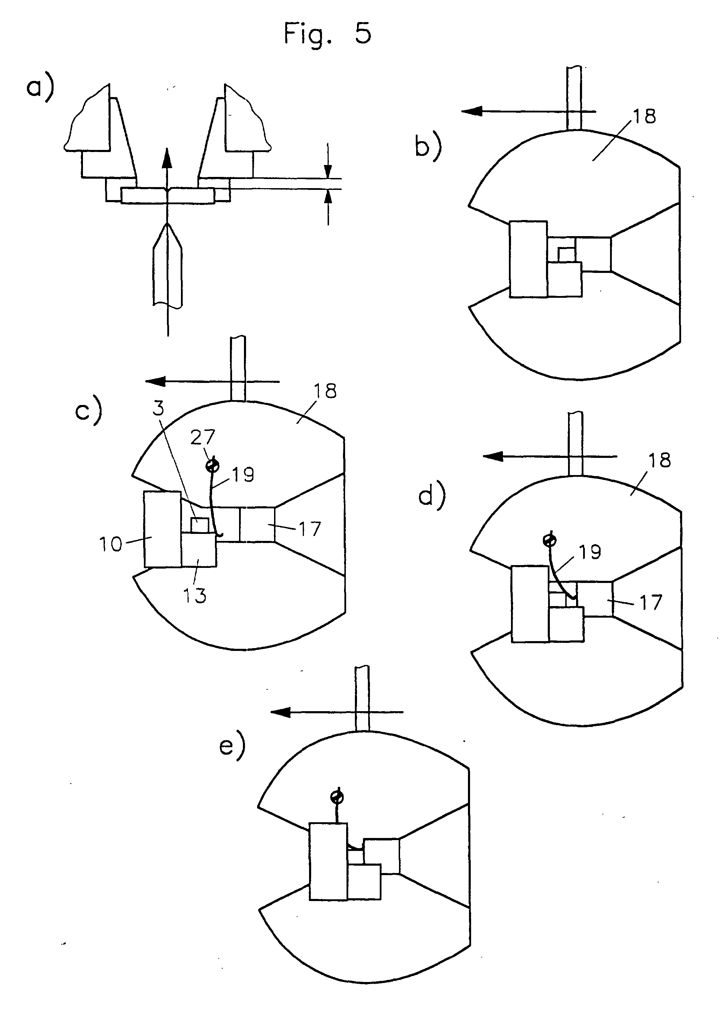

Auf beiden Seiten des Fallhammers 18 ist je eine Feder 19 z. B. mit einer Klemmschraube 27 befestigt. Die Federn 19 müssen parallel ausgerichtet und identisch sein. Beim Fall des Hammers 18 wird eine falsch positionierte Probe 3 durch die Federn 19 noch vor dem Kontakt mit der Hammerfinne 17 gegen das Widerlager 10 gedrückt (Fig. 5a - d). Beim Auftreffen der Finne 17 liegt dann die Probe 3 exakt am Widerlager 10 an und die Federn 19 üben nur noch eine zur Schlagrichtung senkrechte Kraft auf die Probe aus (Fig. 5e).

Die Federkraft muss größer als die Haftreibungskraft zwischen Probe 3 und Auflager 13 sein. Andererseits muss die Federenergie des Anpressvorganges gegenüber dem Arbeitsvermögen des Schlaghammers 18 vernachlässigbar klein sein. Beides lässt sich durch die Verwendung von entsprechend dünnem Federstahl einhalten.

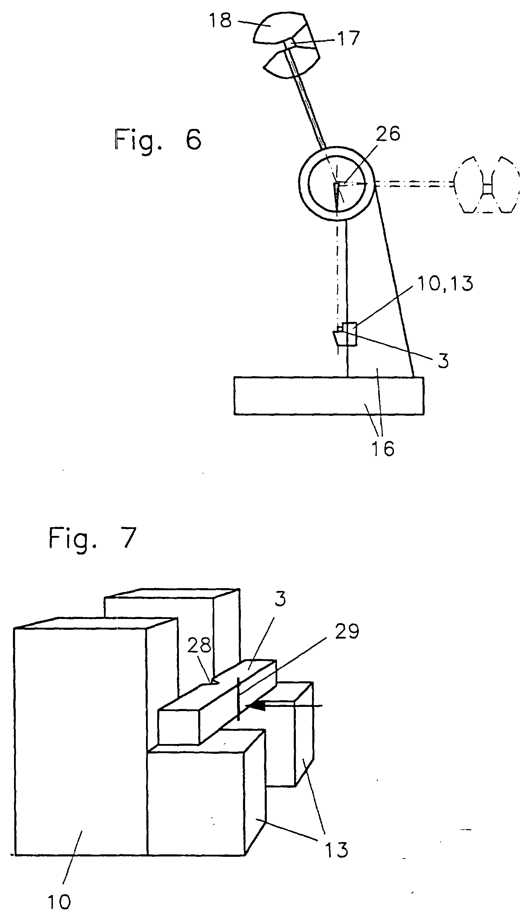

Fig. 6 zeigt schematisch den Kern der Prüfmaschine, nämlich den auf dem Maschinenständer 16 drehbar gelagerten Hammer 18 in Startposition (durchgezogen gezeichnet) und in durchgeschwungener Position (gestrichelt gezeichnet). Der Schleppzeiger 26 auf der Drehachse der Prüfmaschine zeigt den Anschlag beim ersten Ausschwingen nach dem Kerbschlag an. Das ist ein Maß für den Energieinhalt, der beim Schlag für den Bruch verbraucht wurde.

Das Wider 10- und Auflager 13 mit positioniert aufgelegter Probe 3 ist in Fig. 7 hervorgehoben dargestellt. Die senkrechte Linie an der Probe 3 auf der der Kerbe 28 gegenüberliegenden Seite ist die Sollberührstelle 29 der Finne 17 des Hammers 18, dessen Bewegungsherkunft durch den waagrechten Pfeil (Fig. 7) angedeutet ist.

## Patentansprüche

1. Prüfmaschine für Kerbschlagbiegeversuche an Proben, bestehend aus:
einem Fallhammer und einem Lager aus Auf- und Widerlager, einem Probenmagazin mit Probenschieber am Magazinausgang und Probenzuführung am Magazineingang,
einer Temperiereinrichtung zum Temperieren der Proben, **dadurch gekennzeichnet, dass**:
das Probenmagazin (1) mit einem darunter angetriebenen, seitlich geführten Schieber (2) zum Transport einer Probe (3), mit einem Anschlag (4) und einer Rückhalteklappe (5) am Ausgang des Probenmagazins (1) versehen ist,
so dass jeweils nur eine, vom Magazin (1) freigegebene Probe (3) zunächst ortsfest über dem zurück gleitenden Probenschieber (2) bleibt, bis dieser völlig zurückgezogen ist und die Probe (3) in eine Vertiefung (6) an seinem Ende fällt,
die Temperiereinrichtung (7) eine Temperierröhre (8) hat, in der der Probenschieber (2) ein- und durchfährt,
so dass die auf der Vertiefung (6) liegende Probe (3) an die in der Temperierröhre (8) vorgesehene Position (9) transportiert und dort auf die vorgesehene Temperatur temperiert und danach weitertransportiert werden kann,
das Widerlager (10) mit einem Endanschlag (11) und einem Riegel (12) versehen ist,
so dass die temperierte Probe (3) bis zum Endanschlag (11) in die vorgesehene Lage geschoben und beim Zurückziehen des Probenschiebers (2) über den herunter geschnappten Riegel (12) dort gehalten werden kann, damit die Finne (17) des Fallhammers (18) die Probe (3) an vorgesehenem Ort trifft,
die beiden Federn eines stäbförmigen Federpaars (19) jeweils links und rechts am Fallhammer (18) sitzen und in Schlagrichtung drücken,
so dass bei herannahendem Hammer (18) die auf dem Auflager (13) aufliegende Probe (3) vor dem Auftreffen der Finne (17) zunächst vollends gegen das Widerlager (10) geschoben und dann gedrückt wird, bei sich weiterbewegendem Hammer (18) über die freie Probenkante gleitet und mit Beginn der Berührung durch die Finne (17) die Probe (3) nur noch gegen das Auflager (13) drückt, wodurch zu Beginn der Berührung Finne-Probe ein Prellen zwischen den beiden vermieden wird.

2. Prüfmaschine nach Anspruch 1, **dadurch gekennzeichnet, dass** der Antrieb des Probenschiebers (2) von Hand oder durch einen elektrisch oder hydraulisch oder pneumatisch betriebenen Schrittmotor (20) erfolgt.

3. Prüfmaschine nach Anspruch 2, **dadurch gekennzeichnet, dass** die Temperiereinrichtung (7) ein kombiniertes Kühl- und Heizsystem ist, das aus einem zylindrischen Metallblock (21) besteht, in den axiale Strömungskanäle (22) eingelassen sind, durch die zum Kühlen ein flüssiges oder gasförmiges Kühlmedium (24) strömt, wobei zum Regeln der Temperatur in der Temperierröhre (8) ein Stellventil im Kühlkreislauf eingebaut ist,
und zum Heizen mit einem Mantelheizleiter (23) umwickelt ist, der zum Regeln der Temperatur in der Temperierröhre (8) über einen Regler mit Leistungssteller (25) angeschlossen ist.

4. Prüfmaschine nach Anspruch 3, **dadurch gekennzeichnet, dass** die Anlage an eine Datenverarbeitungsanlage angeschlossen ist, die den Versuchsablauf automatisiert und die Messung nach einem Kerbschlagversuch analysiert.

## Claims

1. Testing machine for notch beam impact tests of specimens, consisting of:
A drop hammer and a bearing comprising a support and a counter bearing, a specimen magazine with a specimen pusher at the magazine outlet, and a specimen feed at the magazine inlet, and
a thermostating unit to thermostat the specimens, **characterized by**:
The specimen magazine (1) being equipped with a laterally guided pusher (2) driven from below for the transport of a specimen (3) and a stop (4), and a retaining flap (5) at the outlet of the specimen magazine (1), such that only one specimen (3) that is released by the magazine (1) remains first at a fixed position above the backwards moving specimen pusher (2), until the specimen pusher is withdrawn completely and the specimen (3) falls into a recess (6) at its end,
the thermostating unit (7) having a thermostating pipe (8) that is entered and passed by the specimen pusher (2), such that the specimen (3) lying on the recess (6) is transported to the position envisaged (9) in the thermostating pipe (8), heated there to the temperature specified, and then transported further,
the counter bearing (10) being provided with an end stop (11) and a lock bar (12), such that the thermostated specimen (3) can be shifted into the position envisaged up to the end stop (11) and can be retained there by the engaged lock bar (12) when withdrawing the specimen pusher (2), such that the edge (17) of the drop hammer (18) hits the specimen (3) at the point envisaged,
both springs of a rod-shaped spring pair (19) being located on the left and right of the drop hammer (18), respectively, and pressing in impact direction, such that, while the hammer (18) is approaching, the specimen (3) lying on the support (13) is first shifted towards and then pressed onto the counter bearing (10) prior to the impact of the hammer edge (17), and, while the hammer (18) is moving further, the spring pair slides over the free specimen edge, and, when the impact by the hammer edge (17) starts, the specimen presses against the support (13), only, as a result of which bouncing between the hammer edge and the specimen at the beginning of the contact is avoided.

2. Testing machine according to Claim 1, **characterized by** the specimen pusher (2) being driven by hand or by an electrically or hydraulically or pneumatically driven stepper motor (20).

3. Testing machine according to Claim 2, **characterized by** the thermostating unit (7) being a combined cooling and heating system that consists of a cylindrical metal block (21) provided with axial flow channels (22), through which a liquid or gaseous cooling medium (24) flows for cooling, with a control valve being installed in the cooling circuit to control the temperature in the thermostating pipe (8),
and by the thermostating unit being wrapped by a jacket-type heating element (23) that is connected to a power control unit (25) to control the temperature in the thermostating pipe (8).

4. Testing machine according to Claim 3, **characterized by** the facility being connected to a data processing system that automates the test conduct and analyzes the measurement after a notch beam impact test.

## Revendications

1. Machine de tests pour essais de résilience effectués sur des échantillons, comprenant:
un marteau-pilon et un palier avec appui et contre-appui,
un magasin d'échantillons avec coulisseau d'échantillons à la sortie du magasin et alimentation d'échantillons à l'entrée du magasin,
un dispositif d'équilibrage de température des échantillons, **caractérisée en ce que**:
le magasin d'échantillons (1) est muni d'un coulisseau (2) entraîné par le bas, commandé latéralement pour transporter un échantillon (3), d'un arrêt (4) et d'un clapet de retenue (5) à la sortie du magasin d'échantillons (1),
de sorte que chacun des échantillons (3) libéré individuellement par la magasin (1) reste provisoirement stationnaire au-dessus du coulisseau d'échantillons (2) glissant en retour jusqu'à ce que celui-ci soit complètement retiré et que l'échantillon (3) tombe dans un évidement (6) logé à son extrémité,
le dispositif d'équilibrage de la température (7) possède un tube d'équilibrage de la température (8) par lequel entre et passe le coulisseau d'échantillons (2), de sorte que l'échantillon placé sur l'évidement (6) est transporté à la position (9) prévue dans le tube d'équilibrage de la température (8) où il peut être tempéré à la température prévue et ensuite transféré,
le contre-appui (10) est muni d'une butée de fin de course (11) et d'un verrou (12),
de sorte que l'échantillon tempéré (3) peut être poussé dans la position prévue, jusqu'à la butée de fin de course (11), et qu'il peut être tenu dans cette position lors du retrait du coulisseau d'échantillons (2) sur le verrou (12) décliqueté afin que la panne (17) du marteau-pilon frappe l'échantillon (3) à l'endroit prévu,
chacun des deux ressorts d'un couple de ressorts en forme de barres (19) est placé à droite et respectivement à gauche sur le marteau-pilon (18) et presse dans le sens du coup,
de sorte qu'au moment de l'approche du marteau (18), l'échantillon (3) posé sur l'appui (13), avant l'impact de la panne (17), est d'abord poussé complètement contre le contre-appui (10) et ensuite pressé, que pendant le déplacement du marteau (18), l'échantillon glisse sur son bord libre et que dès le début du contact par la panne (17), l'échantillon (3) ne presse que contre l'appui (13), ce qui permet d'éviter un coup de ricochet entre les deux au début du contact panne-échantillon.

2. Machine de tests selon la revendication 1, **caractérisée en ce que** l'entraînement du coulisseau d'échantillons (2) se fait manuellement ou par un moteur pas à pas (20) commandé électriquement ou hydrauliquement ou pneumatiquement.

3. Machine de tests selon la revendication 2, **caractérisée en ce que** le dispositif d'équilibrage de température (7) constitue un système de refroidissement et de chauffage combiné composé d'un bloc métallique cylindrique (21) pénétré par des canaux d'écoulement axiaux (22) traversés par un refrigérant (24) liquide ou gazeux, une soupape de réglage étant intégré dans le circuit de refroidissement pour régler la température dans le tube d'équilibrage de la température (8), et qui, pour le chauffage, est enrobé d'un conducteur chauffant de la chemise (23) qui est connecté à travers un régulateur avec organe de puissance (25) pour régler la température dans le tube d'équilibrage de la température (8).

4. Machine de tests selon la revendication 3, **caractérisée en ce que** l'installation est connectée à un équipement de traitement des informations qui automatise le déroulement des essais et qui analyse la mesure après un essai de résilience.
